# EUROPEAN PATENT APPLICATION

(11) **EP 2 578 848 A1**
(43) Date of publication of application: **10.04.2013**
(21) Application number: 11786603.8
(22) Date of filing: 23.05.2011
(51) Int. Cl.: F02D 19/08, F02M 21/02

(54) **POST INSTALLABLE TYPE GAS FUEL SUPPLY KIT WHICH CAN BE INSTALLED IN INTERNAL COMBUSTION ENGINES USING LIQUID FUEL**

(30) Priority: 24.05.2010 JP 2010117878
(71) Applicant: Village Road Co., Ltd., Toshima-ku Tokyo 170-0013 (JP)
(72) Inventor: IMAI Sakuichirou, Tokyo 101-0048 (JP); NAKANO Shigeru, Tokyo 101-0048 (JP)
(74) Representative: Cabinet Plasseraud
(86) International application number: PCT/JP2011/061778
(87) International publication number: WO 2011/148904

(57) **Abstract**

The invention provides a gas fuel supply kit for the existing vehicle (vehicle mounting a gasoline engine, or a diesel engine), in order to use a gas fuel such as hydrogen after wards.

A post-installable type gas fuel supply kit to be installed in the existing vehicle such as a gasoline vehicle, comprising a gas fuel injector for supplying the gas fuel such as hydrogen to an intake path; an injector installing means for installing said gas fuel injector to a location which is a different location where a gasoline injector is installed; and a control unit for controlling at least an injection amount, and an injection timing of the gas fuel at the hydrogen fuel injector.

## Description

### Technical Field

The invention relates to a post-installable type gas fuel supply kit which can be installed in an internal combustion engine. In other words, the invention relates to a post-installable type gas fuel supply kit which can be applied to an internal combustion engine by a post-process to provide a Bi-Fuel engine which can use a liquid fuel, as well as, a gas fuel such as hydrogen in combination.

### Background of the Invention

Conventionally, fossil fuels such as gasoline, light oil, and LPG have been used as a fuel for automobile engines. However, there is a possibility of exhaustion of resources of these fossil fuels, and there is also a problem that countries which retain the resources are eccentrically located. Moreover, it is concerned that carbon dioxide produced by combustion thereof could lead global heating, and there is much discussion about the problem of environmental contamination caused by nitrogen oxides contained in the combustion exhaust gas.

Under the circumstances, in order to solve such problems above, a new energy has been sought, and developed in recent years. For such an energy, a hybrid car using an electric energy other than the fossil fuels, an electric vehicle (hereafter, so called EV car) using only an electric energy accumulated in a secondary battery, or a fuel-cell car using an electric energy from fuel cells have been proposed.

The hybrid vehicles on the market now, however, are necessary to use the fossil fuels to charge a battery for driving a motor. Therefore, it cannot be avoid to use the fossil fuels, even though how much any technologies are advanced. In the EV cars using the secondary battery, a certain period of term is required to charge the battery. Therefore, any traveling distance travelable by one-time charge has a limit, which causes a cruising distance problem. Though, the fuel-cell car has provided to completely eliminate such a cruising distance problem, or the use of the fossil fuels, this car is expensive due to the use of platinum as a catalyst, and there is a problem in practical realization.

In the prior art, a technology of the use of hydrogen as a fuel for an automobile engine has been proposed. Further, in consideration that a social base (infrastructure) for supplying hydrogen fuel is not sufficiently developed in view of the presently proposed technologies above, a so-called Bi-Fuel engine, using the hydrogen fuel with the conventional fossil fuels in combination has also been proposed.

For example, in Patent Literature 1 (JP2006-104941A), a control device for controlling an engine which is combustible by switching between a hydrogen gas and gasoline is proposed, in which said engine is controlled by at least three modes: a hydrogen mode for combusting the hydrogen gas; a gasoline mode for combusting the gasoline; and a transition mode for mixing the hydrogen gas and the gasoline, and combusting thereof during a transition period of the term from the hydrogen mode to the gasoline mode.

Further, in Patent Literature 2 (JP2007-24009A), an internal combustion engine is proposed, in which said engine comprises a first fuel supply means for directly supplying gasoline within a combustion chamber; a second fuel supply means for supplying a fuel gas from an intake tube; and a control means for controlling the first and the second fuel supply means based on the operating condition of the internal combustion engine.

### Prior Art References

### Patent Literatures

Patent Literature 1: JP2006-104941A
Patent Literature 2: JP2007-24009A

### Disclosure of the Invention

### Problems to be Solved by the Invention

As described above, the By-Fuel type internal combustion engine using the hydrogen fuel, and the fossil fuels has been known, and the engine control device for controlling the supply ratio of said two fuels has also been known.

However, the subject of these techniques is a newly fabricated vehicle (i.e., "new vehicle"), and therefore, said techniques are for installing to the vehicles which were fabricated so as to use fuels such as gasoline or diesel. Since any social infrastructure for the supply of the hydrogen fuel has not been sufficiently prepared yet, there is an extremely possibility that any demander choose for his/her brand-new car to purchase the Bi-Fuel type vehicle using the hydrogen gas for which the infrastructure has not been provided. Therefore, the conventional technologies above based on the newly fabricated vehicles have not been completed in view of their feasibility.

Accordingly, the first object of the invention is to provide a conversion kit with which any existing vehicle (loading a gasoline engine, or a diesel engine) can be converted afterwards to a vehicle that can also use gas fuels such as hydrogen in combination, i.e., a post-installable gas fuel supply kit which can be installed in the internal combustion engine using a liquid fuel.

Engine configurations, in particular, fuel supply systems in the presently provided vehicles vary based on the vehicles, for example, a liquid fuel such as gasoline is supplied form an intake manifold, or a liquid fuel such as gasoline are directly injected to cylinders, i.e., a cylinder direct injection type have been provided. It is desirable that any original engine performance can be demonstrated, even though a gas fuel supply line is newly added to the existing fuel supply line.

Therefore, the second object of the invention is to provide a post-installable gas fuel supply kit, with which the maximum engine performance can be provided in each of cases where the liquid fuel is supplied from the intake manifold, and where the liquid fuel is directly injected to the cylinders.

### Means for Solving the Problems

In order to solve the problems above, a gas fuel, such as hydrogen, supply kit which can be installed afterwards to the presently commercially available internal combustion engine using the liquid fuel has been developed, and provided according to the invention.

That is, the gas fuel supply kit according to the invention is post-installable gas fuel supply kit, which comprises a gas fuel injector for supplying the gas fuel to a combustion chamber of an internal combustion engine, or an intake path leading to said combustion chamber; an injector installing means for installing said gas fuel injector to a location which is a different location where an injector injecting the liquid fuel is installed; and a control unit for controlling at least an injection amount, and an injection timing of the gas fuel at the gas fuel injector.

Particularly, it is desirable that the engine to which the gas fuel supply kit is installed can use hydrogen as a gas fuel. Because the hydrogen can be artificially produced rather than from a natural source, and no problem of source exhaustion is caused. Therefore, a hydrogen storable cylinder, and a hydrogen supply line (pipe) are to be installed to the existing vehicle when hydrogen is used as a gas fuel. The use of methane or propane as a gas fuel other than hydrogen can be considered. For the liquid fuels, the use of alcohols other than the petroleum-based mineral fuels such as gasoline or diesel can be considered.

Said gas fuel injector supply a gas fuel such as hydrogen fuel to an intake line, or the inner of a cylinder. This gas fuel injector is separately installed from an injector for a liquid fuel, such as gasoline, which has been already installed. For said gas fuel injector, any conventionally used injector used in a propane gas vehicle (LPG vehicle), or a compressed natural gas vehicle (CNG vehicle). Further, for the injection manner for injecting said gas fuel, a gas injection manner wherein LP gas is once gasified from its liquid, and injected (VPI), or a liquid injection manner wherein LP gas is injected as in the liquid state (LPI) may be applied. In order to use the conventional liquid fuels in the invention, however, it is necessary to install said gas fuel injector separately from the liquid fuel injector while the liquid fuel injector is in the its operable state. Also, it is necessary that this gas fuel injector is provided such that said gas fuel injector can be installed afterwards to the supply line of the liquid fuel.

In the invention, said injector installing means installs the existing liquid fuel injector, and the gas fuel injector to be newly installed in different locations. Therefore, depending on the install location of the liquid fuel injector provided in the existing engine, the location where the gas fuel injector is installed can be appropriately varied to configure the gas fuel supply kit.

More specifically, in case where the gas fuel supply kit is used in the cylinder direct injection type internal combustion engine comprising a liquid fuel injector for directly injecting a liquid fuel to a cylinder, and an injector holding part for holding said liquid fuel injector in the cylinder, said gas fuel supply kit can comprises a liquid fuel injector installing means for relocating said liquid fuel injector to an intake manifold and for holding it there; a gas fuel injector, being installed to said injector holding part, for directly injecting the gas fuel to the cylinder; and a control unit for controlling at least an injection amount, and an injection timing of the gas fuel at the gas fuel injector.

Also, in order to install, in particular, to the cylinder direct injection internal combustion engine, said gas fuel supply kit is constructed so that a gas fuel injector is newly installed to the location where the existing liquid fuel injector, and the existing liquid fuel injector can be installed to an intake manifold by a liquid injector installing means which newly provides said liquid fuel injector with the intake manifold. By such a construction, since any air quantity to be supplied to the cylinder is not decreased, sufficient power output can be provided.

On the other hand, in case where the gas fuel supply kit is used in an internal combustion engine wherein a liquid fuel injector for supplying liquid fuel is provided with an intake manifold, said gas fuel supply kit can comprise a gas fuel injector for supplying gas fuel into said intake manifold; a gas fuel injector installing means for installing said gas fuel injector to said intake manifold; and a control unit for controlling at least an injection amount, and an injection timing of the gas fuel at the gas fuel injector.

Also, in order to install to an internal combustion engine in which an injector for liquid fuel, such as gasoline, is provided with near an injector valve within an intake manifold, said gas fuel supply kit comprises a gas fuel injector is installed to said intake manifold separately from said previously provided liquid fuel injector. The location for the installation of the gas fuel injector may be either of the upstream side, or the down stream side the location where the liquid fuel injector is provided in the intake path line.

Said liquid injector installing means which newly provides said liquid fuel injector with the intake manifold, and the gas fuel injector installing means which installs the gas fuel injector to the intake manifold can be provided between the intake manifold and a cylinder block of the engine, or can be fixed to the intake manifold by that an opening part is provided with the intake manifold (in particular, to turning tubes leading to each cylinder block), and the injector is inserted from said opening part, and fixed, for example, by welding.

Further, according to the invention, the gas fuel supply kit can provide a control unit for controlling at least an injection amount, and an injection timing of the gas fuel at the gas fuel injector. For said control unit for gas fuel, it is desirable that said control unit for controlling at least an injection amount, and an injection timing of the gas fuel at the gas fuel injector is provided separately from the engine control unit, though it can also be considered that the existing engine control unit is employed. In this case, any control other than the control of the fuel can be achieved by using the existing engine control unit.

When a control unit for controlling the fuel is separately provided, except that said control unit can be configured such that the injection amount and the injection timing of both liquid and gas fuels, the existing control unit provided to the vehicle can be used for controlling the liquid fuel, while a different control unit can be provided for control the injection amount and the injection timing of the gas fuel.

The newly provided control unit is configured to comprise a program to control the injection amount, or the injection timing of the fuel based on at least the acquired detection signals. The detection signals, for the calculation, or the determination of said injection amount and the injection timing of the fuel, acquire not only injector pulses from the engine control unit previously provided to the vehicle, but also the divided detection signals to be input to the engine control unit previously provided to the vehicle.

Furthermore, the invention provides a vehicle to which the gas fuel supply kit as described above is installed, in order to solve any of the above problems. In the vehicle in which the gas fuel supply kit according to the invention is provided, it can be achieved that not only liquid fuel such as gasoline, but also the newly provided gas fuel can be used. Therefore, the vehicle which is normally driven by the gas fuel such as hydrogen, can be driven by using the liquid fuel such as gasoline in combination with said gas fuel, when high output power is required, for example, high speed running, can be driven with one of the gas fuel and the liquid fuel, when the other of one of the gas fuel and the liquid fuel can be provided.

Particularly, the vehicle in which the gas fuel supply kit according to the invention is installed can have the following configuration, in view of the safety.

That is, a vehicle including a supply line for a liquid fuel, to which a gas fuel tank, a supply line for a gas fuel, and a gas fuel supply kit according to the invention are installed, wherein, said gas fuel is hydrogen, and said gas fuel tank, comprising a pressure sensor, an excess flow valve that discharges the hydrogen in the atmosphere when a measured value by said pressure sensor is a certain vale or above, and a check valve, is installed in a region out of a residential space of the vehicle, wherein, the gas fuel injector constituting said gas fuel supply kit is installed to an engine room, wherein said engine room is provided with a regulator for reducing the pressure of the gas fuel guided to the engine room through the supply line, and a safety valve for discharging the hydrogen in the atmosphere when the reduced pressure is a certain value or above, wherein, detectors are further provided to the region where said gas fuel tank is installed, and to the engine room, detecting the hydrogen concentration in said region, and issuing an alert when said concentration is a certain value or above.

In said vehicle, the pressure of the pipeline leading oxygen from the gas fuel tank to the engine room may be 35 MPa. Further, it is desirable that said pressure is reduced to 7 MPa within the engine room by a regulator, and then, the oxygen is lead to the gas fuel injector.

### Effect of the Invention

According to the gas fuel supply kit of the invention, a conversion kit can be provided, with which any existing vehicle (loading a gasoline engine, or a diesel engine) can be converted afterwards to a vehicle that can also use gas fuels such as hydrogen in combination, i.e., a post-installable gas fuel supply kit which can be installed in the internal combustion engine using a liquid fuel. In addition, the existing vehicles can be converted to Bi-Fuel vehicles at lower cost in simple way, since the invention kit can effectively use any part as provided with the existing vehicles.

According to the invention, a post-installable gas fuel supply kit can be provided, with which the maximum engine performance can be provided in each of cases where the liquid fuel is supplied from the intake manifold, and where the liquid fuel is directly injected to the cylinders.

### Brief Description of the Drawings

[Fig. 1] Fig. 1 is a schematic view showing a configuration of the gas fuel supply kit of one embodiment.
[Fig. 2]Fig. 2 is a schematic view showing a configuration of the gas fuel supply kit of another embodiment.
[Fig. 3] Fig. 3 is a schematic view showing one example of the injector installing means.
[Fig. 4] Fig. 4 is a system diagram showing the first control state of each fuel injector.
[Fig. 5] Fig. 5 is a system diagram showing the second control state of each fuel injector.
[Fig. 6] Fig. 6 is a system diagram showing the third control state of each fuel injector.
[Fig. 7] Fig. 7 is a system diagram showing the fourth control state of each fuel injector.
[Fig. 8] Fig. 8 is a schematic view showing the gas fuel supply kit installed to the vehicle.

### Explanation of Numerical References

- 1: engine
- 2: cylinder
- 3: piston
- 4: intake manifold
- 5: exhaust gas pathway
- 6: intake valve
- 7: exhaust gas valve
- 8: ignition plug
- 9: liquid fuel injector
- 10: gas fuel injector
- 11: collector tank
- 12: electronically control-slot valve
- 13: injector holding part
- 15: air-flow meter
- 16: air-fuel ratio sensor
- 17: crank angle sensor
- 30: engine control unit
- 40: injector control unit
- 50: injector installing means
- 51: flange part

### Embodiment for Practicing the Invention

The invention will now be described in detailed with reference to the drawings, based on one specific embodiment.

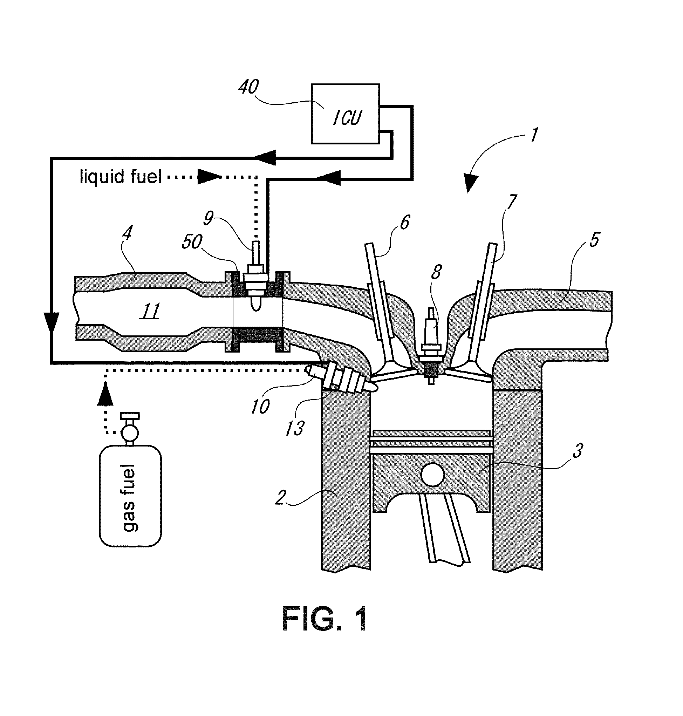

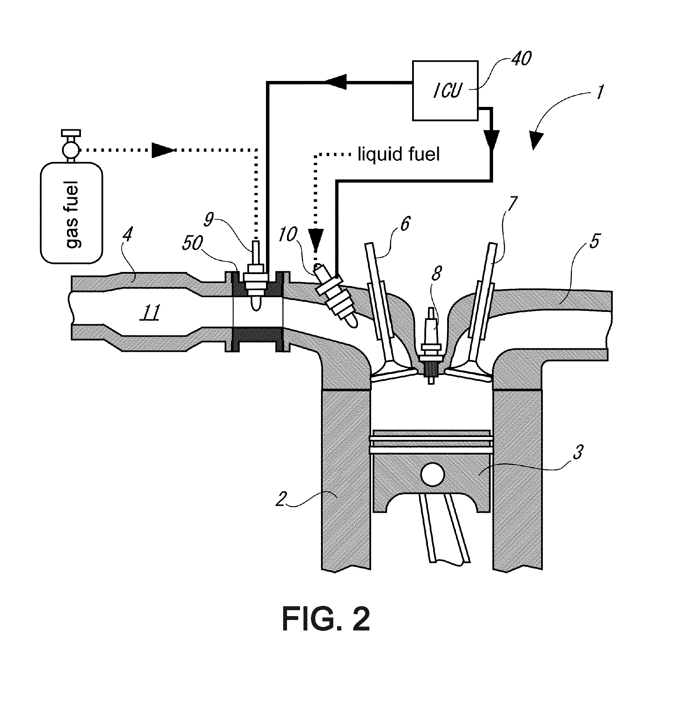

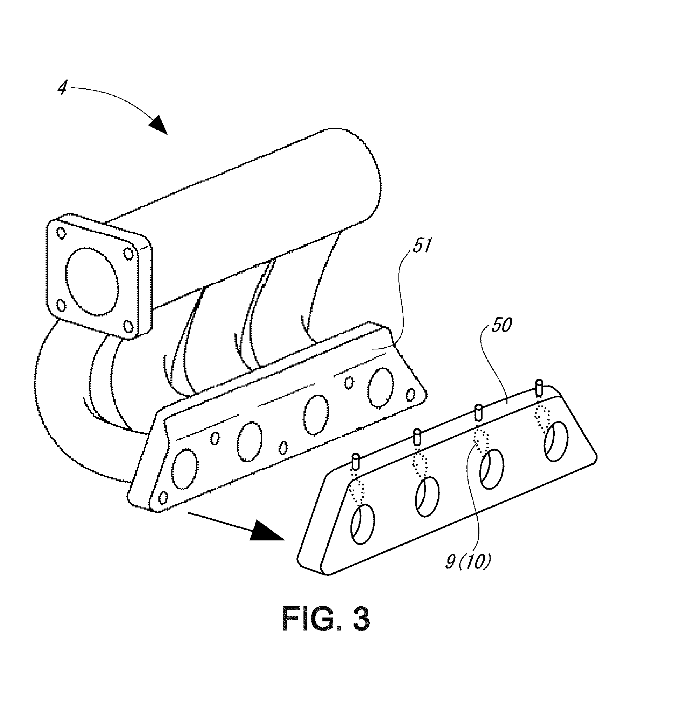

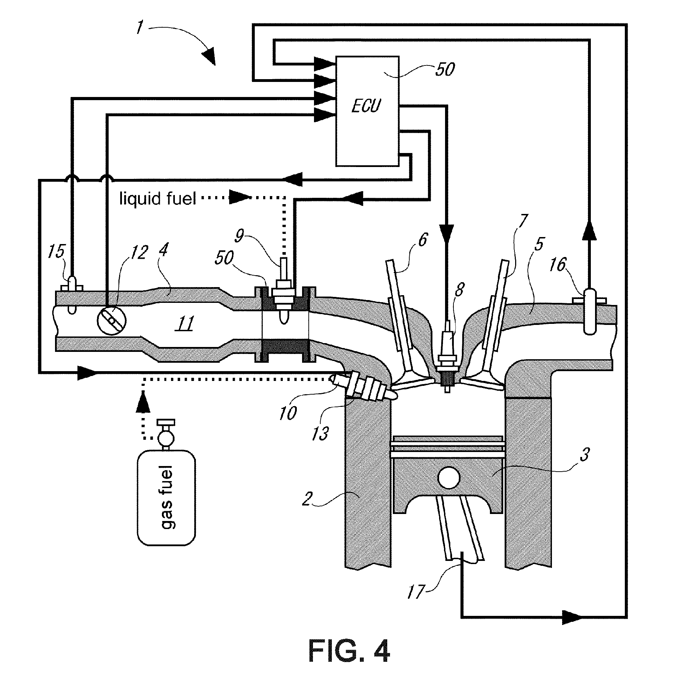

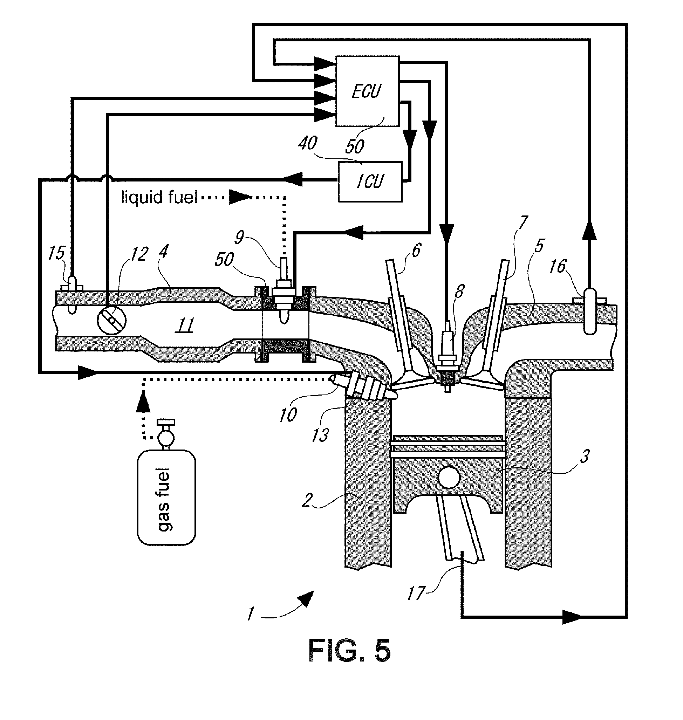

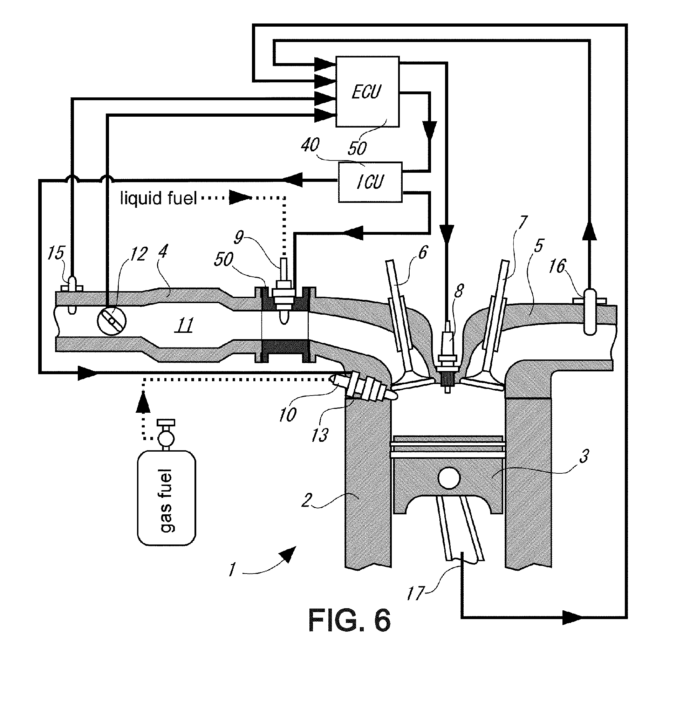

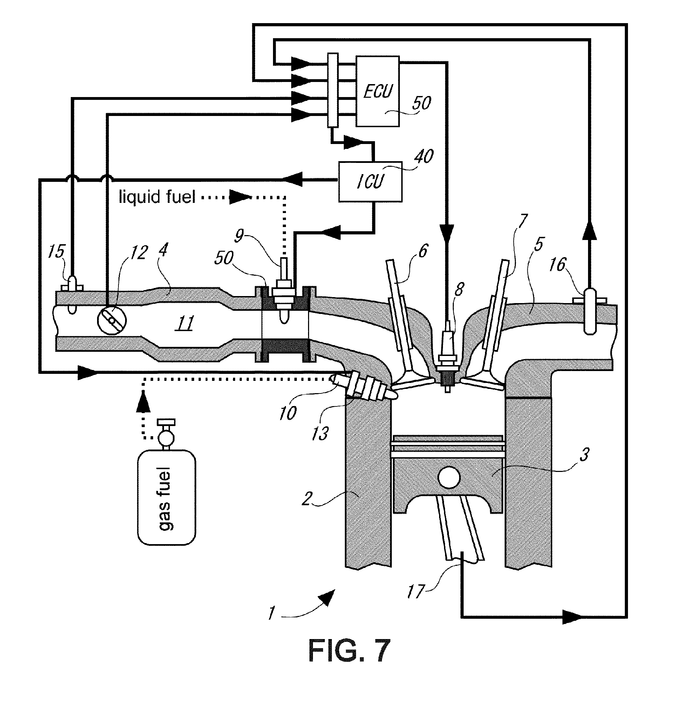

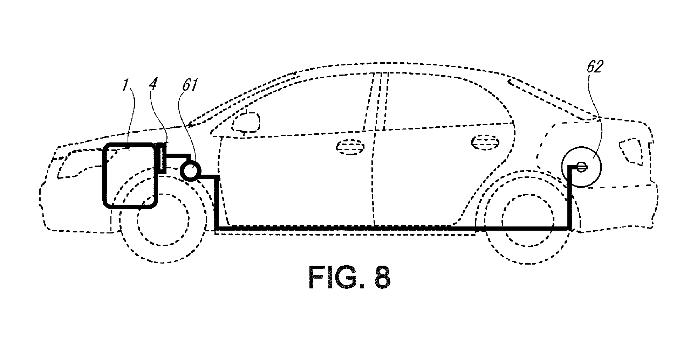

Fig. 1 is a schematic view showing the installation condition of the gas fuel supply kit according to one embodiment; Fig. 2 is a schematic view showing the installation condition of the gas fuel supply kit according to another embodiment; Fig. 3 is a schematic diagram of one example of the injector installing means 50; Fig. 4 is a schematic system diagram showing the first control state of each fuel injector; Fig. 5 is a schematic system diagram showing the second control state of each fuel injector; Fig. 6 is a schematic system diagram showing the third control state of each fuel injector; Fig. 7 is a schematic system diagram showing the fourth control state of each fuel injector; and Fig. 8 is a schematic view showing the gas fuel supply kit installed to the vehicle.

Firstly, the installation condition of the gas fuel supply kit according to one embodiment is described based on Fig. 1. Fig. 1 shows: an internal combustion engine 1; a cylinder 2 provided within the internal combustion engine 1; a piston 3 that reciprocally travels within the cylinder 2; an intake manifold 4 for conducting intake air to the cylinder 2; an exhaust gas path way 5 for discharging already-combusted gas; an intake valve 6 for opening and closing opening parts of the intake manifold 4 within the cylinder 2; an exhaust gas valve 7 for opening and closing the opening part of the exhaust gas path way 5, similar to the valve 6; an ignition plug 8 for spark-ignition of the mix gas within the cylinder 2; a liquid fuel injector 9 for injecting liquid fuel; a gas fuel injector 10 for injecting gas fuel; a collector tank 11 provided to the upstream side of the fuel injector of the intake manifold 4; and an electronically control-slot valve 12 provided to the upstream side of the collector tank 11.

The gas fuel supply kit as shown in Fig. 1 comprises the gas fuel supply kit to be particularly applied to the cylinder direct injection type internal combustion engine 1. More specifically, the internal combustion engine 1 of this type is provided with an injector holding part 13 near the intake valve (intake valve 6) of the cylinder block, in which said holding part is for holding a gas fuel injector 10 which is newly provided with the exiting injector holding part 13 for directly injecting the fuel into the cylinder (cylinder 2). Naturally, it can be considered that said gas fuel injector 10 to be newly provided would have a different size from the size of the liquid fuel injector 9 which has been installed to this existing injector holding part 13. However, it is desirable that said injector 10 is provided without any need to modify the cylinder block as much as possible, for example, by providing an adaptor for the liquid fuel injector 9 to be newly installed.

The injector installing means 50 is provided between the cylinder block and the intake manifold 4, and the liquid fuel injector 9 which has been provided with the existing injector holding part 13 is fixed by this injector installing means 50 to the internal combustion engine 1.

To each of the gas fuel injector 10, and the liquid fuel injector 9 installed in this way, corresponding fuels are supplied, respectively, and the injection motions of each fuel are controlled by an injector control unit 40 (ICU) comprising a computer. Every control of each injector will be explained below.

The internal combustion engine 1 in which the gas fuel supply kit having the configuration as described above can be operated by using gas fuel for its basic operation, and can be operated by also using liquid fuel such as gasoline, when a certain power output is required, for example, at a high-speed rotation, as well. In this configuration, in particular, air containing the liquid fuel is guided from the intake valve 6 to the combustion chamber during the intake process, and the gas fuel is injected to the combustion chamber during the compression process to shift to the combustion process. As a result of the combustion of the liquid fuel, high power output can be provided. It is not always necessary of the injection of the gas fuel during the compression process, and it can be configured to only use the liquid fuel at a high-speed rotation.

The injectors above are devices for injecting these fuels, respectively, and each has injection holes, and a valve mechanism in side thereof. The liquid fuel injector 9 is connected to a high pressure fuel pump, while the gas fuel injector 10 is connected to a regulator 61 for adjusting the pressure of the gas fuel. These injectors open their valve to inject the corresponding fuels from the injection holes upon receiving the signals for opening valves from the injector control unit 40.

In Fig. 1, the ignition plug 8 for igniting the fuel conducted to the combustion chamber is provided. This ignition plug 8 comprises an electrode part for electric discharge at the tip, and installed to a cylinder head such that said electrode part face to the combustion chamber. The electrode part is arranged in almost the center of the upper part of the combustion chamber. The ignition plug 8 is connected to an ignition mechanism (not shown) so that said plug cooperates to the reciprocal traveling of the piston 3, and discharges at the electrode part during an appropriate ignition period of time. The electrode part of the ignition plug 8 may be provided not to the center, but another location of the combustion chamber.

Fig. 2 is a schematic view showing the installation condition of the gas fuel supply kit according to another embodiment. The gas fuel supply kit as shown in this drawing comprises an internal combustion engine 1, in which a liquid fuel injector 9 is provided to the cylinder head, is newly provided with a gas fuel injector 10. In the condition of the embodiment as shown in this drawing, in particular, the gas fuel injector 10 is provided to the upstream side of the existing liquid fuel injector 9 in the intake line, and said gas fuel injector 10 is provided to the injector installing means 50 which is arranged at the connecting part between an intake manifold 4 and a cylinder block. The installation order of this liquid fuel injector 9, and the gas fuel injector 10, however, can be appropriately varied depending on the configuration of the internal combustion engine 1 in which they are to be installed. That is, as shown in Fig. 2, instead of the liquid fuel injector 9 which has been provided to the cylinder head, the gas fuel injector 10 is newly installed, and said existing liquid fuel injector 9 can be shifted to the injector installing means 50 which is newly provided.

Similar to the case as shown in Fig. 1, the motions of the liquid fuel injector 9, and the gas fuel injector 10 are controlled by an injector control unit 40.

In every embodiment as shown in Figs. 1 and 2, though an example where the injector installing means 50 is provided to which the fuel injector is installed, in view of the configuration of the internal combustion engine 1, it can also be considered that the fuel injector is installed to a hole which is drilled to the intake manifold 4, when it is difficult to install this injector installing means 50.

Fig. 3 is a perspective view illustrating the injector installing means used in each embodiment of Figs. 1 and 2 above. The injector installing means 50 is fixed between the intake manifold 4 and the cylinder block of the internal engine 1. This intake manifold 4 includes a flange part 51 for fixing thereof to the cylinder block, and this flange part 51 is provided with openings corresponding to each diverging pipe leading to the combustion chamber within the cylinder block, respectively. The injector installing means 50 has an almost the same size of the flange part 51, and openings corresponding to the above mentioned openings of the flange part 51. Within this injector installing means 50, the liquid fuel injector 9, or the gas fuel injector 10 is provided. Within the openings formed to the injector installing means 50 are provided with injection nozzles of said injector so as to protrude. The injector installing means 50 can be formed such that a hole part is provided therewith, which is in communication with every opening, and gas fuel is injected to this hole part.

As described above, by providing the injector installing means 50 for installing any fuel injector between the intake manifold 4 and the engine block, the existing vehicle (e.g., gasoline engine vehicle) can be easily converted to a Bi-Fuel one which also uses gas fuel.

Next, with reference to Figs. 4 to 7, the specific configuration for controlling the liquid fuel injector 9 and the gas fuel injector 10 will be explained below. Although, Figs. 4 to 7 particularly provides an explanation of the embodiment as shown in Fig. 1, they can also be applied to the embodiment as illustrated in Fig. 2.

Firstly, Fig. 4 illustrates an example, in which the injection amount, and the injection timing of the fuels for each of the liquid fuel injector 9 and the gas fuel injector 10 are controlled by the use of an engine control unit which has been already installed to a commercially available vehicle. Fig. 4 shows an air-flow meter 15 for detecting the intake air amount, provided to the upstream side of an electronically controlling-slot valve 12; an air-fuel ratio sensor 16 for detecting the air-fuel ratio of the exhaust gas flowing in an exhaust gas purifying catalyst; a crank angle sensor 17 for detecting a rotational angle of a crank shaft connected to the piston 3 through a connecting rod; an engine control unit 30 for controlling an ignition timing, a fuel injection timing, a fuel injection amount, a variable valve mechanism 9, an electronically controlling-slot valve 12, etc. The same parts as in Fig. 1 are indicated by the same numerical references.

The engine control unit 30 controls the degree of opening of the electronically controlling-slot valve 12 based on the detected value from, for example, an accelerator position sensor. In this time, every fuel injection is controlled such that a prescribed air-fuel ratio to the intake air amount which is detected by the air-flow meter 15 is maintained. The opening-closing timing of the intake valve 6 is detected based on the phase difference between the intake cam shaft 6 and the crank shaft from the detected signals of the cam angle sensor (not shown), and a crank angle sensor. The fuel injection can be controlled, firstly, based on the intake air amount detected by the air-flow meter 15; the air-fuel ratio of the exhaust gas detected by the air-fuel ratio sensor 16; the rotational angle of the crank shaft detected by the crank angle sensor 17; and the degree of opening of the electronically controlling-slot valve 12 to provide the required power output. The fuel injection can also be controlled based on various detection data of, for example, a cooling water temperature, an intake air temperature, the pressure within the collector tank 11, a cooling water temperature, and temperatures of the fuels.

In this embodiment as shown in Fig. 4, the engine control unit 30 controls the injection amount, or the injection timing of the fuels of the liquid fuel injector 9, and the gas fuel injector 10, based on, for example, the intake air amount detected by the air-flow meter 15, and further controls the ignition timing at the ignition plug 8. For this configuration, it is necessary to rewrite the program of the existing engine control unit 30, since said unit does not include such program that the injection amount or timing of the fuel at the newly provided gas fuel injector 10 is calculated.

In Fig. 5, the engine control unit 30, in which the detected signals from every sensor are collected as same in Fig. 4, controls the ignition plug 8 having the existing structure, and the liquid fuel injector 9. On the other hand, it is configured that the newly provided gas fuel injector 10 acquires the injection pulse from said engine control unit 30, and the injector control unit 40 calculates the injection amount, or the injection timing of the fuel at the gas fuel injector 10 based on this injection pulse. Therefore, in said embodiment, it is necessary to newly provide the injector control unit 40, and to modify the program of the engine control unit 30 for controlling the liquid fuel injector 9.

Fig. 6 illustrates an embodiment regarding the embodiment as shown in Fig. 5 above, in which the injector control unit is newly provided. In this embodiment, however, it is particularly configured such that the provided injector control unit 40 controls the injection amount, or the injection timing of the fuels at the liquid fuel injector 9, and the gas fuel injector 10. More specifically, injection pulse is acquired from the engine control unit 30, and, based on the pulse signals, a new injection pulse is output for the liquid fuel injector 9, and the gas fuel injector 10, respectively. In this configuration formed, the engine control unit 30 can control the ignition plug 8, and output injection pulses in the same manner as in the existing one, whereby the necessary to modify the program of the engine control unit 30 can be eliminated.

Fig. 7 shows that the newly provided injector control unit 40 is configured to control the liquid fuel injector 9, and the gas fuel injector 10 in the same manner as in Fig. 6, except that the signals used for controlling both injectors are not the injection pulse acquired from the engine control unit 30, but the signals acquired from the divided signals detected in different sensors (sensors as provided with the vehicle), for example, the intake air amount detected by the air-flow meter 15. In this configuration, the operation of each injector can be controlled after taking into consideration of not only the injection pulse, but also various factors. For example, it is possible to carefully determine when much more gas fuel should be supplied, based on the signals acquired from the various sensors.

The gas fuel supply kit configured in this way can be installed to a vehicle as shown in Fig. 8. Fig. 8 shows that a tank 62 for storing the liquid fuel within its trunk, which is sectioned apart from the housing space of the vehicle, is particularly provided, from which the liquid fuel is conducted into the engine room.

In such a configuration above, when the gas fuel is hydrogen, in particular, a hydrogen concentration detection means is provided within the engine room, and the trunk room, respectively, in order to improve the safety. When hydrogen is used, it is possible that the pressure of the pipe line from the trunk room to the engine room is 35 MPa, and this pressure is decreased to 7 MPa by the regulator 60 which is provided within the engine room to supply the hydrogen to the gas fuel injector 10.

Although, one embodiment in which the kit is installed to the internal combustion engine using gasoline fuel was explained above, the kit can be used in the internal combustion engine using diesel fuel, and in a hybrid vehicle using the liquid fuel (fossil fuel) and an electric energy in combination, as well.

### Industrial Applicability

According to the gas fuel supply kit, the existing vehicles can be converted to a Bi-Fuel vehicle in a simple way and at a low cost, which can rouse new demand.

Further, it can be expected that the social infrastructure for providing hydrogen as fuel, which will, in turn, lead to a lasting exit from the use of the fossil fuel.

## Claims

1. A post-installable type gas fuel supply kit to be installed in an internal combustion engine using liquid fuel as a fuel, **characterized by** comprising:
a gas fuel injector for supplying the gas fuel to a combustion chamber of said internal combustion engine, or an intake path leading to said combustion chamber;
an injector installing means for installing said gas fuel injector to a location which is a different location where an injector injecting the liquid fuel is installed; and
a control unit for controlling at least an injection amount, and an injection timing of the gas fuel at the gas fuel injector.

2. A gas fuel supply kit used in a cylinder direct injection type internal combustion engine comprising a liquid fuel injector for directly injecting a liquid fuel to a cylinder, and an injector holding part for holding said liquid fuel injector in the cylinder, **characterized by** comprising:
a liquid fuel injector installing means for relocating said liquid fuel injector to an intake manifold and for holding it there;
a gas fuel injector, being installed to said injector holding part, for directly injecting the gas fuel to the cylinder; and
a control unit for controlling at least an injection amount, and an injection timing of the gas fuel at the gas fuel injector.

3. A gas fuel supply kit used in an internal combustion engine in which a liquid fuel injector for supplying a liquid fuel is installed to an intake manifold therein, **characterized by** comprising:
a gas fuel injector for supplying a gas fuel within said intake manifold;
a gas fuel injector installing means for installing said gas fuel injector to said intake manifold; and
a control unit for controlling at least an injection amount, and an injection timing of the gas fuel at the gas fuel injector.

4. The gas fuel supply kit according to any one of Claims 1 to 3, in which said control unit is a gas fuel control unit for controlling an injection amount, and an injection timing of the gas fuel at the gas fuel injector,
wherein, the unit is separately provided from a control unit a control unit for controlling an injection amount, and an injection timing of the liquid fuel.

5. The gas fuel supply kit according to any one of Claims 1 to 3, in which said control unit controls the injection amount, and the injection timing of the gas fuel at the gas fuel injector, and an injection amount and an injection timing of the liquid fuel at the existing liquid fuel injector,
said control unit acquires injector pals from an engine control unit previously installed to a vehicle to output control signals for the injection amount and the injection timing of the fuel to the gas fuel injector, or the gas fuel injector and the liquid fuel injector.

6. The gas fuel supply kit according to any one of Claims 1 to 3, in which said control unit controls the injection amount, and the injection timing of the gas fuel at the gas fuel injector, or the injection amount, and the injection timing of the gas fuel at the gas fuel injector and the injection amount, and the injection amount, and the injection timing of the liquid fuel at the existing liquid fuel injector,
wherein, said control unit acquires detection signals input to an engine control unit previously installed to a vehicle, and output control signals for the injection amount and the injection timing of the fuel to the gas fuel injector, or the gas fuel injector and the liquid fuel injector.

7. A vehicle including a supply line for a liquid fuel, to which a gas fuel tank, a supply line for a gas fuel, and a gas fuel supply kit according to any one of Claims 1 to 6 are installed, **characterized in that**:
wherein, said gas fuel is hydrogen, and said gas fuel tank, comprising a pressure sensor, an excess flow valve that discharges the hydrogen in the atmosphere when a measured value by said pressure sensor is a certain vale or above, and a check valve, is installed in a region out of a residential space of the vehicle,
wherein, the gas fuel injector constituting said gas fuel supply kit is installed to an engine room, wherein said engine room is provided with a regulator for reducing the pressure of the gas fuel guided to the engine room through the supply line, and a safety valve for discharging the hydrogen in the atmosphere when the reduced pressure is a certain value or above,
wherein, detectors are further provided to the region where said gas fuel tank is installed, and to the engine room, detecting the hydrogen concentration in said region, and issuing an alert when said concentration is a certain value or above.

## Amended claims

### Amended claims under Art. 19.1 PCT

**1.** A post-installable type gas fuel supply kit to be installed in an internal combustion engine using liquid fuel as a fuel, **characterized by** comprising:
a gas fuel injector for supplying the gas fuel to a combustion chamber of said internal combustion engine, or an intake path leading to said combustion chamber;
an injector installing means for installing said gas fuel injector to a location which is a different location where an injector injecting the liquid fuel is installed; and
an injector control unit which is separately provided from a previously provided engine control unit to a vehicle,
wherein, said injector control unit comprises a program for controlling at least an injection amount, and an injection timing of the gas fuel at the gas fuel injector.

**2.** A gas fuel supply kit used in a cylinder direct injection type internal combustion engine comprising a liquid fuel injector for directly injecting a liquid fuel to a cylinder, and an injector holding part for holding said liquid fuel injector in the cylinder, **characterized by** comprising:
a liquid fuel injector installing means for relocating said liquid fuel injector to an intake manifold and for holding it there;
a gas fuel injector, being installed to said injector holding part, for directly injecting the gas fuel to the cylinder; and
an injector control unit which is separately provided from a previously provided engine control unit to a vehicle,
wherein, said injector control unit comprises a program for acquiring injector pulse from said previously provided engine control unit to control at least an injection amount, and an injection timing of the gas fuel at the gas fuel injector.

**3.** A gas fuel supply kit used in an internal combustion engine in which a liquid fuel injector for supplying a liquid fuel is installed to an intake manifold therein, **characterized by** comprising:
a gas fuel injector for supplying a gas fuel within said intake manifold;
a gas fuel injector installing means for installing said gas fuel injector to said intake manifold; and
an injector control unit which is separately provided from a previously provided engine control unit to a vehicle,
wherein, said injector control unit comprises a program for acquiring injector pulse from said previously provided engine control unit to control at least an injection amount, and an injection timing of the gas fuel at the gas fuel injector.

**4.** The gas fuel supply kit according to any one of Claims 1 to 3, in which said control unit acquires detection signals input to an engine control unit previously installed to a vehicle, and output control signals for the injection amount and the injection timing of the fuel to the gas fuel injector and the liquid fuel injector.

**5.** A vehicle including a supply line for a liquid fuel, to which a gas fuel tank, a supply line for a gas fuel, and a gas fuel supply kit according to any one of Claims 1 to 4 are installed, **characterized in that**:
wherein, said gas fuel is hydrogen, and said gas fuel tank, comprising a pressure sensor, an excess flow valve that discharges the hydrogen in the atmosphere when a measured value by said pressure sensor is a certain vale or above, and a check valve, is installed in a region out of a residential space of the vehicle,
wherein, an gas fuel injector constituting said gas fuel supply kit is installed to an engine room, wherein said engine room is provided with a regulator for reducing the pressure of the gas fuel guided to the engine room through the supply line, and a safety valve for discharging the hydrogen in the atmosphere when the reduced pressure is a certain value or above,
wherein, detectors are further provided to the region where said gas fuel tank is installed, and to the engine room, detecting the hydrogen concentration in said region, and issuing an alert when said concentration is a certain value or above.
